# EUROPEAN PATENT APPLICATION

(11) **EP 4 572 517 A1**
(43) Date of publication of application: **18.06.2025**
(21) Application number: 22954516.5
(22) Date of filing: 11.08.2022
(51) Int. Cl.: H04W 76/14, H04W 12/084

(54) **INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Dehns Germany Partnerschaft mbB
(86) International application number: PCT/CN2022/111826
(87) International publication number: WO 2024/031549

(57) **Abstract**

Provided in the embodiments of the present disclosure are an information processing method and apparatus, and a communication device and a storage medium. The information processing method, which is executed by a relay UE, may comprise: sending a first request message to a network device, wherein the first request message at least comprises: a relay service code (RSC); receiving a first response message returned by the network device on the basis of the first request message, wherein a relay UE has a permission to provide a relay service indicated by the RSC, and the first response message comprises: a security parameter for UE-to-UE relay discovery; after the first response message is received, monitoring a second request message from a source UE; and when the relay UE supports that the second request message includes the relay service indicated by the RSC, broadcasting a third request message according to the second request message and relay information. The relay UE can respectively establish a connection with the source UE and the target UE to serve as a relay to realize UE-to-UE relay communication between the source UE and the target UE.

## Description

### TECHNICAL FIELD

The present disclosure relates to, but is not limited to, the wireless communication technical field, and in particular to an information processing method and apparatus, a communication device and a storage medium.

### BACKGROUND

Proximity services (ProSe) allow User Equipment (UE) to discover each other through a UE to UE (U2U) relay (i.e., a relay device). That is, if a source UE cannot communicate directly with a target UE, it can communicate with the target UE by discovering a U2U relay. This procedure may trigger a discovery procedure between UEs. However, the U2U relay actually acts as an untrusted communication node, which may lead to Man-In-the-middle-attacks (MIMT).

### SUMMARY

Embodiments of the present disclosure provide an information processing method and apparatus, a communication device, and a storage medium.

A first aspect of an embodiment of the present disclosure provides an information processing method. The method is performed by a relay UE, and the method includes: sending a first request message to a network device, wherein the request message includes at least a Relay Service Code (RSC); receiving a first response message which is returned by the network device based on the first request message, wherein the relay UE is authorized to provide a relay service indicated by the RSC, and the first response message includes a security parameter for UE-to-UE relay discovery; after receiving the first response message, performing monitoring of a second request message from a source UE; when the relay UE supports the relay service indicated by the RSC included in the second request message, broadcasting a third request message according to the second request message and relay information.

A second aspect of an embodiment of the present disclosure provides an information processing method. The method is performed by a source UE, and the method includes: sending a first request message to a network device, wherein the request message includes at least an RSC; receiving a first response message which is returned by the network device based on the first request message, wherein the source UE is authorized to obtain a relay service indicated by the RSC, and the first response message includes a security parameter for UE-to-UE relay discovery; after receiving the first response message, broadcasting a second request message, wherein the second request message is used to discover a target UE through a relay UE.

A third aspect of an embodiment of the present disclosure provides an information processing method. The method is performed by a target UE, and the method includes: sending a first request message to a network device, wherein the request message includes at least an RSC; receiving a first response message which is returned by the network device based on the first request message, wherein the target UE is authorized to obtain the relay service indicated by the RSC, and the first response message includes a security parameter for UE-to-UE relay discovery; performing monitoring of a third request message after receiving the first response message; when the target UE supports the relay service indicated by an RSC carried in the third request message, returning a third response message, wherein the third response message is used for a relay UE to return a second response message to a source UE.

A fourth aspect of an embodiment of the present disclosure provides an information processing apparatus. The method includes: a first sending module configured to send a first request message to a network device, wherein the request message includes at least a Relay Service Code (RSC); a first receiving module configured to receive a first response message which is returned by the network device based on the first request message, wherein the relay UE is authorized to provide a relay service indicated by the RSC, and the first response message includes a security parameter for UE-to-UE relay discovery; a first monitoring module configured to perform monitoring of a second request message from a source UE after the first response message is received; wherein the first sending module is configured to broadcast a third request message according to the second request message and relay information when the relay UE supports a relay service indicated by an RSC included in the second request message.

A fifth aspect of an embodiment of the present disclosure provides an information processing apparatus. The apparatus includes: a second sending module configured to send a first request message to a network device, wherein the request message includes at least a Relay Service Code (RSC); a second receiving module configured to receive a first response message which is returned by the network device based on the first request message, wherein the source UE is authorized to obtain a relay service indicated by the RSC, and the first response message includes a security parameter for UE-to-UE relay discovery; wherein the second sending module is further configured to broadcast a second request message after the first response message is received, and the second request message is used to discover a target UE through a relay UE.

A sixth aspect of an embodiment of the present disclosure provides an information processing apparatus. The apparatus includes: a third sending module configured to send a first request message to a network device, wherein the request message includes at least a Relay Service Code (RSC); a third receiving module configured to receive a first response message which is returned by the network device based on the first request message, wherein the target UE is authorized to obtain a relay service indicated by the RSC, and the first response message includes a security parameter for UE-to-UE relay discovery; a second monitoring module configured to perform monitoring of a third request message after the first response message is received; wherein the third sending module is configured to return a third response message when the target UE supports a relay service indicated by an RSC carried in the third request message, and the third response message is used for a relay UE to return a second response message to a source UE.

A seventh aspect of an embodiment of the present disclosure provides a communication device, including a processor, a transceiver, a memory, and an executable program stored in the memory and capable of being run by the processor. When the processor runs the executable program, the information processing method provided in any one of the first to third aspects is implemented.

A tenth aspect of an embodiment of the present disclosure provides a computer storage medium. The computer storage medium stores an executable program. After the executable program is executed by a processor, the information processing method provided in any one of the first to third aspects can be implemented.

In the technical solutions provided by the embodiment of the present disclosure, if the relay UE needs to discover each other with the source UE and the target UE, it is needed to obtain authentication provisioned by the network device through the security parameter, thereby reducing the MITM attack caused by the relay UE being a communication node that is not trusted by other UE(s) and/or network device(s). Thus, the security of the relay communication can be improved.

It should be understood that the foregoing general description and the following detailed description are illustrative and explanatory only and are not restrictive of the embodiments of the present disclosure.

### BRIEF DESCRIPTION OF THE DRAWINGS

The accompanying drawings, which are incorporated in and constitute a part of the specification, illustrate embodiments consistent with the present disclosure and, together with the specification, serve to explain the principles of the embodiments of the present disclosure.
FIG. 1 is a schematic structural diagram of a wireless communication system according to an example embodiment;
FIG. 2 is a schematic flowchart of an information processing method according to an example embodiment;
FIG. 3 is a schematic flowchart of an information processing method according to an example embodiment;
FIG. 4 is a schematic flowchart of an information processing method according to an example embodiment;
FIG. 5 is a schematic flowchart of an information processing method according to an example embodiment;
FIG. 6 is a schematic flowchart of an information processing method according to an example embodiment;
FIG. 7 is a schematic flowchart of an information processing method according to an example embodiment;
FIG. 8 is a schematic flowchart of an information processing method according to an example embodiment;
FIG. 9 is a schematic flowchart of an information processing method according to an example embodiment.
FIG. 10 is a schematic diagram of a structure of an information processing apparatus according to an example embodiment;
FIG. 11 is a schematic diagram of a structure of an information processing apparatus according to an example embodiment;
FIG. 12 is a schematic diagram of a structure of an information processing apparatus according to an example embodiment;
FIG. 13 is a schematic diagram of a structure of a UE according to an example embodiment;
FIG. 14 is a schematic diagram of a structure of a network device according to an example embodiment.

### DETAILED DESCRIPTION

Example embodiments will be described in detail herein, examples of which are illustrated in the accompanying drawings. When the following description refers to the drawings, the same numbers in different drawings refer to the same or similar elements unless otherwise indicated. The implementations described in the following example embodiments do not represent all implementations consistent with embodiments of the invention. Rather, they are merely examples of apparatuses and methods consistent with some aspects of embodiments of the present disclosure.

The terms used in embodiments of the present disclosure are for the purpose of describing example embodiments only and are not intended to limit the embodiments of the present disclosure. As used in the present disclosure, the singular forms "a/an", "said" and "the" are intended to include a plural form as well, unless the context clearly dictates otherwise. It will also be understood that the term "and/or" as used herein refers to and includes any and all possible combinations of one or more of associated listed items.

It should be understood that although the terms first, second, third, etc. may be used to describe various information in the embodiments of the present disclosure, the information should not be limited to these terms. These terms are only used to distinguish information of the same type from each other. For example, without departing from the scope of the embodiments of the present disclosure, first information may also be called second information, and similarly, second information may also be called first information. Depending on the context, the word "if" as used herein may be interpreted as "when" or "in a case where..." or "in response to determining...".

It should be noted that, for the same parameter(s)/noun(s), unless otherwise stated, it(they) has(have) the same meanings in different embodiments, and therefore is(are) not separately described in each embodiment.

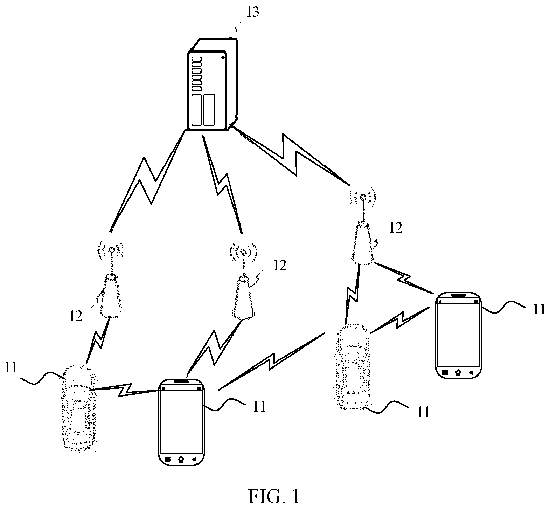

FIG. 1 shows a schematic structural diagram of a wireless communication system provided by an embodiment of the present disclosure. As shown in FIG. 1, the wireless communication system is a communication system based on cellular mobile communication technologies. The wireless communication system may include multiple UEs 11 and multiple access devices 12.

A UE 110 may be a device that provides voice and/or data connectivity to a user. The UE 11 may communicate with one or more core networks via a Radio Access Network (RAN). The UE 11 may be an Internet of Things UE, such as a sensor device, a mobile phone (or referred to as a cellular phone), and a computer with Internet of Things UE, for example, it can be a fixed, portable, pocket-sized, handheld, computer-built-in or vehicle-mounted device. For example, the UE 11 may be a station (STA), a subscriber unit, a subscriber station, a mobile station, a mobile, a remote station, an access point, remote UE (remote terminal), access UE (access terminal), a user terminal, a user agent, a user device, or user equipment (UE). Alternatively, the UE 11 may be equipment of an unmanned aerial vehicle. Alternatively, the UE 11 may be a vehicle-mounted device, for example, it may be an on-board computer with a wireless communication function, or wireless communication device connected to an external on-board computer. Alternatively, the UE 11 may be a roadside device, for example, it may be a streetlight, a signal light or other roadside device with a wireless communication function.

An access device 12 may be a network side device in a wireless communication system. The wireless communication system may be the 4th generation mobile communication (4G) system, also known as the Long Term Evolution (LTE) system; or, the wireless communication system may be a 5G system, also called new radio (NR) system or 5G NR system. Alternatively, the wireless communication system may be a next-generation system of the 5G system. The access network in the 5G system may be called New Generation-Radio Access Network (NG-RAN), or a MTC system.

The access device 12 may be an evolved access device (eNB) used in the 4G system. Alternatively, the access device 12 may be an access device (gNB) using a centralized distributed architecture in the 5G system. When the access device 12 adopts a centralized distributed architecture, it usually includes a central unit (CU) and at least two distributed units (DU). The central unit is provided with a protocol stack including a Packet Data Convergence Protocol (PDCP) layer, a Radio Link Control protocol (RLC) layer, and a Media Access Control (MAC) layer; a distributed unit is provided with a physical (PHY) layer protocol stack. The embodiments of the present disclosure do not limit the specific implementation of the access device 12.

A wireless connection may be established between an access device 12 and a UE 11 through a radio air interface. In different implementations, the radio air interface is a radio air interface based on the fourth generation mobile communication network technology (4G) standard; or, the radio air interface is a radio air interface based on the fifth generation mobile communication network technology (5G) standard, for example, the radio air interface is a new air interface; alternatively, the radio air interface may be a radio air interface based on the next generation mobile communication network technology standard of 5G.

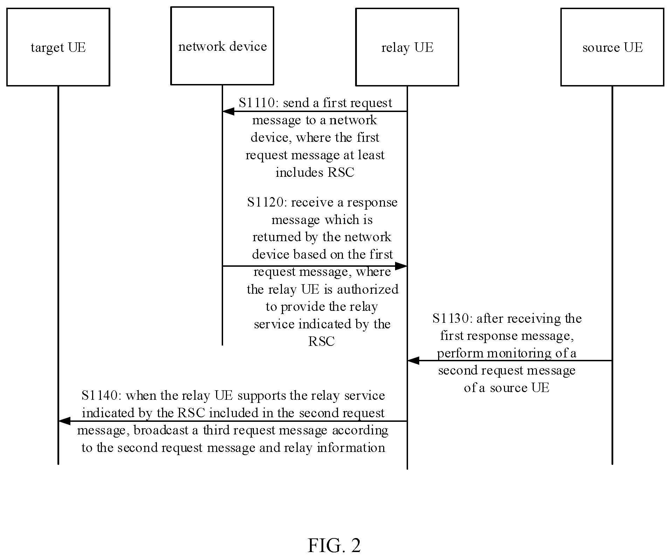

As shown in FIG. 2, an embodiment of the present disclosure provides an information processing method. The method is performed by a relay UE, and the method includes:
In S1110, a first request message is sent to a network device. The first request message at least includes a Relay Service Code (RSC).

The RSC may be used to identify a relay service. The first request message may be used by a network device to authenticate whether the relay UE is authorized to provide the relay service indicated by the RSC, and/or to request provision of a security parameter for the relay service indicated by the RSC.

In S1120, a first response message which is returned by the network device based on the first request message is received. The relay UE is authorized to provide the relay service indicated by the RSC, and the first response message includes a security parameter for UE-to-UE relay discovery. As an example, the first response message may be used for the relay UE to determine whether the relay UE is authorized to provide the relay service indicated by the RSC, and/or for providing the relay UE with the security parameter for providing the relay service indicated by the RSC.

In S1130, after receiving the first response message, monitoring from a second request message from a source UE is performed. As an example, the second request message is used to request the relay UE to discover a target UE. In S1140, when the relay UE supports a relay service indicated by an RSC included in the second request message, a third request message is broadcast according to the second request message and relay information. As an example, the third request message is used to notify the target UE and the relay UE to establish a relay link.

The relay UE is a U2U relay device, which can also be called a U2U relay. The relay UE is capable of establishing links with the source UE and the target UE respectively to realize a UE to UE relay communication between the source UE and the target UE as a relay.

The relay UE can be a UE that performs a relay communication based on a PC5 interface or an SR5 interface. The relay UE here is a relay device for a UE-to-UE (U2U) communication between a source UE and a target UE.

The network device may be any network device that may configure security parameter(s) for the relay UE. As an example, the network device may be a core network device. The core network device includes but is not limited to at least one of the following: Direct Discovery Name Management Function (DDNMF) and/or ProSe Key Management Function (PKMF), etc. That is, the core network device such as DDNMF and/or PKMF provides security parameter(s) for U2U relay communication, thereby reducing the security risk of U2U relay communication and improving the security of the U2U relay communication.

For example, the first request message includes an identity of the relay UE. After receiving the first request message, the network device determines whether the relay UE is authorized for the relay service indicated by the RSC included in the first request message by querying subscription data, a control policy of the relay UE and/or a service configuration of the ProSe application server.

RSCs for different relay services are different. Security parameter(s) is(are) related to a RSC. Thus, for a UE supporting the relay service indicated by the same RSC, the security parameter(s) returned by the network device can be the same.

In an embodiment, the first response message may include a reject message. For example, if the network device determines that the relay UE is not authorized to provide the relay service indicated by the RSC included in the first request message, the first response message may be a reject message.

In another embodiment, the first response message may include an accept message. For example, if the network device determines that the relay UE is authorized to provide the relay service indicated by the RSC included in the first request message, the first response message may be an accept message, and the accept message may include the security parameter(s).

As an example, the security parameter(s) may include: authorization and/or key parameter(s) for U2U relay communication, etc. In short, these parameters may be used for subsequent authority and/or security check for U2U relay communication.

After the security parameter(s) is(are) returned to the relay UE, the security parameter(s) can be used by the relay UE to complete relay discovery between a source UE and a target UE based on mode A and/or mode B.

The first request message includes but is not limited to a Relay Discovery key Request message. Correspondingly, in this case, the first response message may include a Relay Discovery key Response message.

The second request message and the third request message may both include but are not limited to solicitation messages.

As an example, S1140 may include at least one of the following:
when the second request message on a broadcast channel is received and the relay UE supports a relay service indicated by an RSC carried in the second request message, generating and broadcasting a third request message, wherein as an example, the third request message may include the second request message and relay information at the same time, or the third request message is generated according to the second request message and the relay information; or
when the second request message on the broadcast channel is received and the relay UE supports the relay service indicated by the RSC carried in the second request message, generating and broadcasting a third request message, wherein, as an example, the third request message may include the second request message and the relay information at the same time, or the third request message is generated according to the second request message and the relay information.

In an embodiment, the relay information may be any information of the relay UE, which may specifically include but is not limited to: an identifier (ID) of the relay UE.

In another embodiment, the relay information may include: an identifier of the relay UE and a ProSe direct discovery forwarding indication, etc.

Of course, the above is only an example of the relay information, and the specific implementation is not limited to the above example.

The message content of the second request message may include:
ID of the source UE;
ID of the target UE;
information of a type of discovery.

The ID of the target UE and the ID of the source UE may include but are not limited to: Restricted Proximity Service Application User Identities (Restricted Prose Application User, RPAUIDs).

The information of the type of discovery indicates the type of discovery. For example, the type of discovery may include: U2U discovery or U2N discovery.

In an embodiment of the present disclosure, the information of type of discovery carried in an announcement message indicates U2U discovery. In mode B, mutual discovery between UEs needs to be realized through a broadcast request message and a response message corresponding to the request message.

In summary, in the embodiments of the present disclosure, if the relay UE needs to discover each other with the source UE and the target UE, it needs to be authenticated by the network device through a security parameter, thereby reducing the MITM attack caused by the relay UE being a communication node that is not trusted by other UE(s) and/or network device(s). Thus, the security of the relay communication is improved.

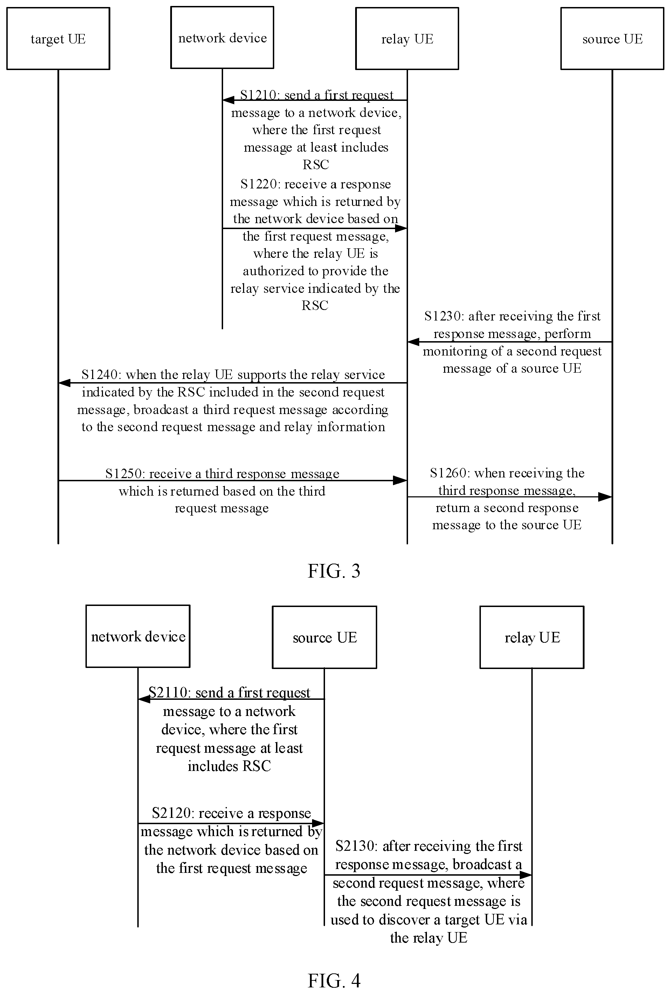

As shown in FIG. 3, an embodiment of the present disclosure provides an information processing method. The method is performed by a relay UE, and the method includes:
In S1210, a first request message is sent to a network device. The request message at least includes: RSC.

In S1220, a first response message which is returned by the network device based on the first request message is received. The relay UE is authorized to provide a relay service indicated by the RSC, and the first response message includes a security parameter for UE-to-UE relay discovery.

In S1230, after receiving the first response message, monitoring of a second request message from the source UE is performed.

In S1240, when the relay UE supports a relay service indicated by an RSC included in the second request message, a third request message is broadcast according to the second request message and relay information.

In S1250, a third response message which is returned based on the third request message is received. As an example, the third response message is used to notify the relay UE that a relay link between a target UE and the relay UE can be established. In S1260, upon receiving the third response message, a second response message is returned to the source UE. As an example, the second response message is used to notify the source UE that the relay UE is capable of establishing a relay link between the source UE and the target UE.

After the relay UE broadcasts the third request message, the relay UE may receive the third response message replied by the target UE, or the relay UE may not receive the third response message. Therefore, in the embodiment of the present disclosure, if the relay UE receives the third response message, the relay UE returns the second response message to the source UE.

In this way, after the source UE receives the second response message, the source UE can start the procedure of establishing a relay link with the relay UE. Furthermore, if the relay UE receives a request to establish a relay link from the source UE, the relay UE can start the establishment of a relay link with the target UE.

After the relay link between the relay UE and the source UE and the relay link between the target UE and the relay UE are established, a direct link between the source UE and the target UE can be further established through the relay UE.

Likewise, the third response message may also be a response message for a solicitation message.

The method further includes:
obtaining a security policy, wherein the security policy is pre-configured on the relay UE, the security policy is determined according to a protocol, or the security policy is received in advance from a network device;
if security protection is not needed for the third request message according to the security policy, directly broadcasting the third request message in plain text; or
if security protection needs to be performed on the third request message according to the security policy, performing security processing on the third request message using the received security parameter, and broadcasting the third request message for which the security processing is completed.

The security policy may be used by the relay UE to determine whether the security parameter needs to be used for security protection when establishing relay links with the source UE and the target UE, respectively.

The security processing includes at least one of the following:
performing integrity protection on the third request message using the security parameter to obtain an integrity-protected third request message; or
performing confidentiality protection on the third request message using the security parameter to obtain a confidentiality-protected third request message; or
performing confidentiality protection and integrity protection on the third request message using the security parameter to obtain a confidentiality-protected and integrity-protected third request message.

In some embodiments, when the relay UE supports the relay service indicated by the RSC included in the second request message, broadcasting the third request message according to the second request message and the relay information includes:
when it is monitored that the second request message includes the RSC and security check on the second request message using the security parameter is passed, broadcasting the third request message according to the second request message and the relay information.

The security check on the second request message using the security parameter may include:
performing integrity check on the second request message using the security parameter, wherein if the second request message passes the integrity check, it can be considered that the security check of the second request message is passed; or
performing confidentiality check on the second request message using the security parameter, wherein if the second request message passes the confidentiality check, it can be considered that the security check of the second request message is passed; or
performing integrity check and confidentiality protection check on the second request message using the security parameter, wherein if the second request message passes the integrity check and the second request message is successfully decrypted using the security parameter, it can be considered that the security check of the second request message is passed.

In some embodiments, the second request message further includes at least one of the following:
information of type of discovery;
device information of the source UE;
device information of the target UE.

The information of the type of discovery indicates the type of discovery. As an example, the type of discovery may include: U2U discovery or User Equipment (UE) to Network (U2N) discovery. In an embodiment of the present disclosure, the information of the type of discovery may indicate U2U discovery.

The device information of the source UE includes but is not limited to the ID and/or a device type of the source UE.

The device information of the target UE includes but is not limited to the ID and/or a device type of the target UE.

In some embodiments, the relay information includes at least one of the following:
device information of the relay UE;
a relay indication.

The device information of the relay UE includes but is not limited to the ID of the relay UE. As an example, the device information of the relay UE may further include device type information.

The relay indication may indicate that the currently broadcast request message is forwarded by the relay UE. In this case, upon receiving, the target UE needs to further extract the device information of the relay UE from the response message.

As shown in FIG. 4, an embodiment of the present disclosure provides an information processing method. The method is performed by a source UE, and the method includes:
In S2110, a first request message is sent to a network device. The request message includes at least: RSC. The RSC may be used to identify a relay service. The first request message may be used by the network device to authenticate whether the source UE is authorized to obtain the relay service indicated by the RSC, and/or request for providing a security parameter for the relay service indicated by the RSC.

In S2120, a first response message which is returned by the network device based on the first request message is received. The source UE is authorized to obtain the relay service indicated by the RSC, and the first response message includes a security parameter for UE-to-UE relay discovery. As an example, the first response message may be used for the source UE to determine whether the relay UE is authorized to provide the relay service indicated by the RSC, and/or for providing the source UE with a security parameter for providing the relay service indicated by the RSC.

In S2130, after the first response message is received, a second request message is broadcast. The second request message is used to discover a target UE through the relay UE. As an example, the source UE may be an initiating UE of a service based on a direct link.

Similarly, the first request message includes the identifier of the source UE. After receiving the first request message, the network device determines whether the source UE is authorized to obtain the relay service indicated by the RSC included in the first request message by querying subscription data, a control policy of the source UE and/or a service configuration of the ProSe application server.

RSCs for different relay services are different. Security parameter(s) is(are) related to a RSC. Thus, for a UE supporting the relay service indicated by the same RSC, the security parameter(s) returned by the network device can be the same.

In an embodiment, the first response message may include a reject message. For example, if the network device determines that the source UE is not authorized to obtain the relay service indicated by the RSC included in the first request message, the first response message may be a reject message.

In another embodiment, the first response message may include an accept message. For example, if the network device determines that the source UE is authorized to obtain the relay service indicated by the RSC included in the first request message, the first response message may be an accept message, and the accept message may include the security parameter.

As an example, the security parameter(s) may include: authorization and/or key parameter(s) for U2U relay communication, etc. In short, these parameters may be used for subsequent authority and/or security check for U2U relay communication.

After the security parameter(s) is(are) returned to the source UE, the security parameter(s) can be used by the source UE to complete relay discovery between the relay UE and the target UE based on mode A and/or mode B.

The first request message includes but is not limited to a Discovery key Request message. Correspondingly, the first response message in this case may include a relay key response message (Relay Discovery key response message).

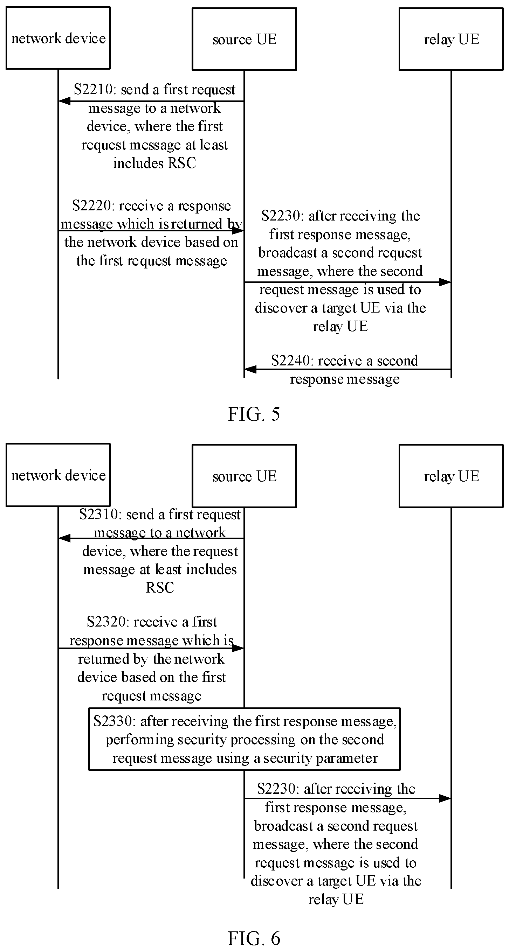

As shown in FIG. 5, an embodiment of the present disclosure provides an information processing method. The method is performed by a source UE. The method includes:
In S2210, a first request message is sent to a network device. The request message at least includes: RSC.

In S2220, a first response message which is returned by the network device based on the first request message is received. The source UE is authorized to obtain the relay service indicated by the RSC, and the first response message includes: a security parameter for UE-to-UE relay discovery.

In S2230, after receiving the first response message, a second request message is broadcast. The second request message is used to discover a target UE through a relay UE.

In S2240, a second response message is received. The second response message is sent by the relay UE after the relay UE receives a third response message. The third response message is returned to the relay UE after the target UE receives the third request message which is broadcast based on the second request message and the relay information.

The information processing method is performed by the source UE. Similarly, the message of the first request message may be but is not limited to a Relay Discovery key Request message. Correspondingly, the first response message in this case may include a relay key response message (Relay Discovery key response message). In some embodiments, the first request message may include: an ID of an optional relay UE and/or an ID of an optional target UE that has been discovered at a historical moment. The ID includes but is not limited to RPAUID.

After the source UE receives the security parameter, the source UE is authorized to use the relay service indicated by the RSC carried in the first request message, and when there is a need to obtain the relay service indicated by the RSC, the source UE broadcasts the second request message.

If the second request message is successfully monitored by the relay UE, a second response message is received. The second response message may be returned by the relay UE after the relay UE discovers the target UE for the relay communication which the source UE requests. In this case, the second response message may be an accept message. Of course, if the relay UE does not discovery the target UE that the source UE requests to communicate, the source UE may not receive the second response message that is the accept message.

In some embodiments, the method further includes:
after receiving the second response message, establishing a relay link with the relay UE, wherein the relay link is used for a relay communication between the source UE and the target UE.

If the source UE receives the second response message, it proceeds to the step of establishing a relay link with the relay UE.

As an example, establishing the relay link with the relay UE may include:
sending a Direct Communication Request (DCR) message and so on to the relay UE,
receiving a direct communication response message from the relay UE.

Key negotiation is completed through the DCR messages and the DRC response message, thereby establishing a secure direct link between the source UE and the relay UE.

Of course, the above is just a specific example of the relay link between the relay UE and the source UE, and the specific implementation is not limited to the above example.

The relay link is a SL link.

If the security policy corresponding to the RSC indicates that mutual discovery between UEs is not required and integrity check and/or confidentiality check is not required, the second request message broadcast by the source UE does not need to be a plaintext request message.

If the security policy corresponding to the RSC indicates that integrity check and confidentiality check need to be performed between UEs, the source UE needs to perform security processing on the second request message using the security parameter before broadcasting the second request message, and then broadcasts the second request message for which security processing is performed. Therefore, as shown in FIG. 6, an embodiment of the present disclosure provides an information processing method. The method is performed by the source UE, and the method includes:
In S2310, a first request message is sent to a network device. The request message at least includes: RSC.

In S2320, a first response message which is returned by the network device based on the first request message is received. The source UE is authorized to obtain the relay service indicated by the RSC, and the first response message includes a security parameter for UE-to-UE relay discovery.

In S2330, after receiving the first response message, security processing is performed on the second request message using the security parameter.

In S2340, the second request message, for which security processing using the security parameter is performed, is broadcast.

The security processing on the second request message using the security parameter here may include but is not limited to at least one of the following:
performing integrity protection on the second request message using the security parameter to obtain an integrity-protected second request message;
performing confidentiality protection on the second request message using the security parameter to obtain a confidentiality-protected second request message;
performing integrity protection and/or confidentiality protection on the second request message using the security parameter to obtain an integrity-protected and confidentiality-protected second request message.

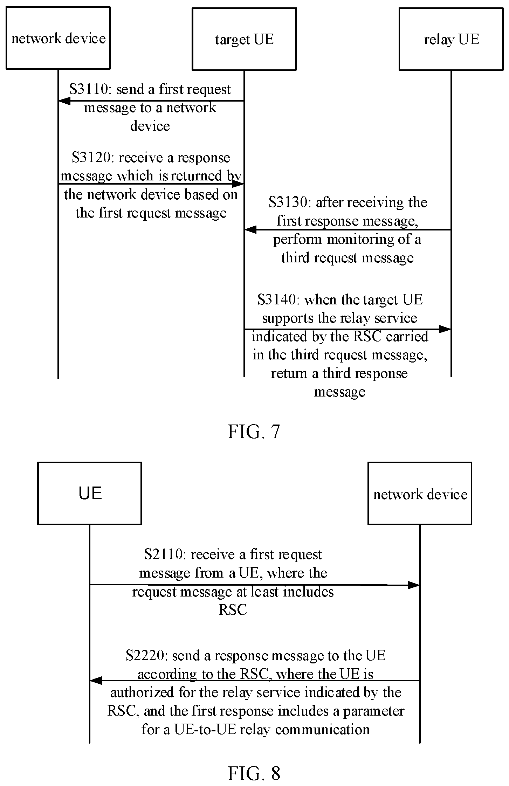

As shown in FIG. 7, an embodiment of the present disclosure provides an information processing method. The method is performed by a target UE, and the method includes:
In S3110, a first request message is sent to a network device. The request message includes at least an RSC, and the RSC may be used to identify a relay service. The first request message may be used by the network device to authenticate whether the target UE is authorized to obtain the relay service indicated by the RSC, and/or request to provide a security parameter for the relay service indicated by the RSC.

In S3120, a first response message which is returned by the network device based on the first request message is received. The target UE is authorized to obtain the relay service indicated by the RSC, and the first response message includes the security parameter for UE-to-UE relay discovery. As an example, the first response message may be used for the relay UE to determine whether the target UE is authorized to provide the relay service indicated by the RSC, and/or for providing the target UE with the security parameter for providing the relay service indicated by the RSC.

In S3130, monitoring of a third request message is performed after the first response message is received. The third request message is used to notify the target UE to establish a relay link with the relay UE.

In S3140, when the target UE supports the relay service indicated by the RSC carried in the third request message, a third response message is returned. The third response message is used for the relay UE to return the second response message to the source UE.

The information processing method may be performed by the target UE, and the target UE may also communicate with its corresponding DDNMF or PKMF to obtain the above-mentioned security parameter.

In some embodiments, when the target UE supports the relay service indicated by the RSC carried by the third request message, returning the third response message includes:
when the target UE supports the relay service indicated by the RSC carried in the third request message and the third request message passes security check based on the security parameter, returning the third response message.

In some embodiments, the method further includes:
after sending the third response message, receiving a link establishment request from the relay UE;
based on the link establishment request, establishing a relay link with the relay UE, wherein the relay link is used for a relay communication between the target UE and the source UE.

The link establishment request includes but is not limited to a Direct Communication Request (DCR) message.

If the target UE determines to establish a relay link with the relay UE, the target UE returns a direct communication response to the relay UE based on the direct communication request, thereby performing key negotiation through the direct communication request and the direct communication response, and completing the establishment of a secure relay link.

In some embodiments, when the target UE supports the relay service indicated by the RSC carried by the third request message, returning the third response message includes:
when the target UE supports the relay service indicated by the RSC carried by the third request message and selects the relay UE to obtain the relay service, sending the third response message, wherein the third response message is used for the relay UE to return the second response message to the source UE.

If the target UE supports the relay service indicated by the RSC carried in the third request message but does not select the relay UE to obtain the relay service, the third request message indicating acceptance of the communication request is not returned, or a reject message is returned.

The present disclosure provides an information processing method which may include:
ensuring that the source UE and target UE can securely discover each other through UE-to-UE relay,
providing message integrity and/or confidentiality protection for the discovery procedure of U2U relay transmission.

When an application program client in a UE intends to discover other UE(s), for example, to discover UE(s) of friend accounts of the application program, the UE obtains a RPAUID list (target RPAUID list) of these users or/and a relay user ID list (relay RPAUID list) that can provide a relay service from the ProSe application server, and the UE can monitor the target UE or relay UE in the list. The target RPAUID list or/and the relay RPAUID list are delivered to the UE in an application layer container.

When using the UE relay, a RSC needs to be obtained before performing U2U relay discovery. The RSC may be pre-configured on the UE, or may be provisioned by the network device to the relay UE during the UE service authorization procedure.

As shown in FIG. 8, an embodiment of the present disclosure provides an information processing method. The method is performed by a network device. The method includes:
In S4110, a first request message is received from a UE. The first request message at least includes a RSC.

In S4220, a first response message is sent to the UE according to the RSC, wherein the UE is authorized for a relay service indicated by the RSC, and the first response message includes a security parameter for UE-to-UE relay discovery.

The network device may be any network device that can configure security parameter(s) for the UE. As an example, the network device may be a core network device. The core network device includes but is not limited to at least one of the following: Direct Discovery Name Management Function (DDNMF) and/or 5G ProSe Key Management Function (PKMF), etc. That is, core network device such as DDNMF and/or PKMF provides security parameter(s) for U2U relay discovery, thereby reducing the security risk of U2U relay communication and improving the security of U2U relay communication.

The UE may be a source UE, a target UE or a relay UE that performs a communicate based on a PC5 interface or a SR5 interface. The relay UE here refers to a UE-to-UE relay device between a source UE and a target UE.

The first request message may be various message(s) that can be sent by a UE to a network device. The first request message includes but is not limited to a first Relay Discovery key Request message. Correspondingly, the first response message in this case may include a first Relay Discovery key response message.

RSCs for different relay services are different. Security parameter(s) is(are) related to a RSC. Thus, for a UE supporting the relay service indicated by the same RSC, the security parameter(s) returned by the network device can be the same.

As an example, the security parameter(s) may include any parameter(s) such as authorization and/or key parameter(s) used for U2U relay discovery.

After the security parameter(s) is(are) returned to the UE, the security parameter(s) can be used by the UE to complete relay discovery between the source UE and the target UE with the relay UE respectively based on mode A and/or mode B.

In some embodiments, the first request message further includes: an ID of the UE;
the method further includes:
determining, according to the ID of the UE, whether the UE is authorized for UE-to-UE relay communication;
sending the first response message to the UE according to the RSC includes:
   when the UE is authorized for the UE-to-UE relay communication, sending the first response message to the UE according to the RSC.

The ID of the UE may include but is not limited to a Restricted Proximity Service Application User Identity (Restricted Prose Application User, RPAUID) of the UE.

As an example, determining whether the UE is authorized for the UE-to-UE relay communication according to the ID of the UE may include: if the UE is a relay UE, determining whether the relay UE is capable of providing the relay service according to the ID of the relay UE.

For example, the PKMF and/or DDNMF of the relay UE sends an authorization request to other network device(s) such as an application server and receives an authorization response from other network element(s). The other network device(s) here may include but not limited to: a Prose application server, a Policy Control Function (PCF) or Unified Data Management (UDM).

As an example, determining, according to the ID of the UE, whether the UE is authorized for the UE-to-UE relay communication may include:
if the UE is a source UE or a target UE, determining, according to the ID of the source UE or the ID of the target UE, whether the source UE or the target UE is capable of using the relay service indicated by the RSC in the first request message.

For example, the PKMF and/or DDNMF of the source UE or the target UE sends an authorization request to other network device(s) such as an application server and receives an authorization response from other network element(s). The other network device(s) here may include but not limited to: a Prose application server, a Policy Control Function (PCF) or Unified Data Management (UDM).

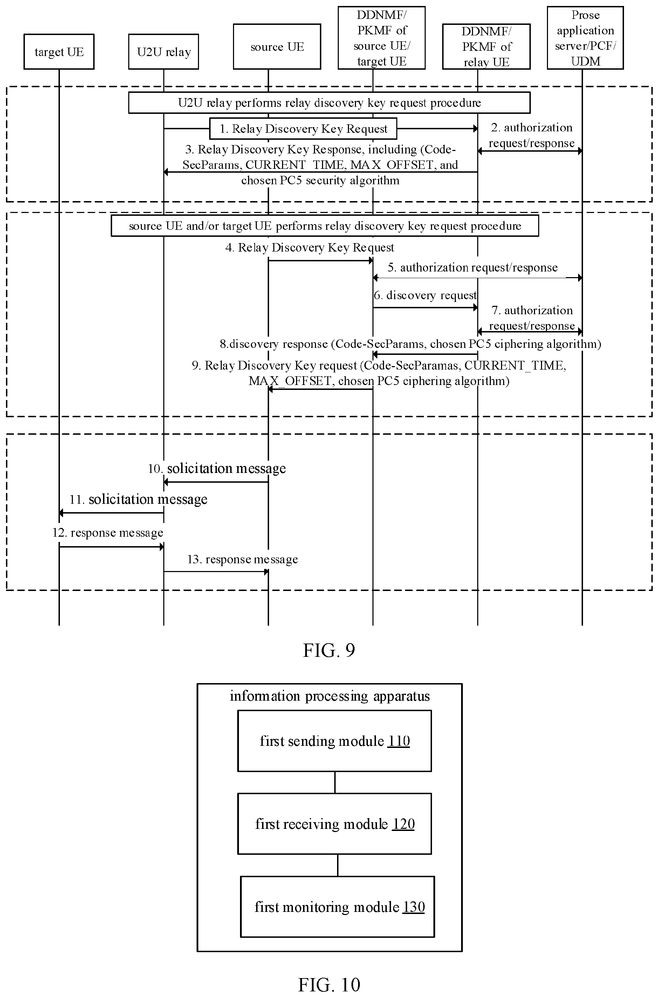

As shown in FIG. 9, an information processing method provided by an embodiment of the present disclosure may include:

### First Stage:

1. The U2U relay sends a Relay Discovery Key Request message including a RPAUID and a Relay Service Code (RSC) to the 5G DDNMF or PKMF to obtain the associated security material. In addition, the U2U relay should provide its own PC5 UE security capability, and the Relay Discovery Key Request message further includes a list of encryption algorithms supported by the UE.
   It is worth noting that: in the user plane based security procedure for U2U relay discovery, the 5G PKMF is used; in the control plane based security procedure for U2U relay discovery, the 5G DDNMF is used.
2. The 5G DDNMF/PKMF may check for authorization with the ProSe application server /PCF/UDM.
   It is worth noting that: if the U2U relay is in a roaming state, the DDNMFs in the Home Public Land Mobile Network (HPLMN) and the Visited Public Land Mobile Network (VPLMN) of the U2U relay exchange authorization of the U2U relay.
3. The 5G DDNMF/PKMF of the U2U relay returns the security parameter(s) corresponding to the RSC, as well as CURRENT_TIME and MAX_OFFSET, and so on. The CURRENT_TIME is the current timestamp, and the MAX_OFFSET is a time offset. The timestamp and the MAX_OFFSET can ensure that the UE is protected from replay attacks by attackers. For the U2U relay, the security parameter(s) corresponding to the RSC can be: Code-SecParams.

The security parameter(s) is(are) generated according to the RSC, and the security parameter(s) is(are) necessary security material in the U2U relay discovery procedure. The 5G DDNMF/PKMF of the U2U relay should include the selected PC5 security algorithm in the Relay Discovery Key Response message. The 5G DDNMF/PKMF determines the selected PC5 security algorithm according to the RSC and the received PC5 UE security capability in step 1. The U2U relay stores the RSC and the selected PC5 security algorithm together. The selected PC5 security algorithm may include the selected PC5 encryption algorithm and/or the selected PC5 integrity algorithm. The PC5 encryption algorithm is used for confidentiality protection. The selected PC5 integrity algorithm is used for PC5 integrity protection.

It is worth noting that a U2U relay supporting multiple RSCs can use multiple U2U relay discovery messages to obtain corresponding security parameter(s), and each U2U relay discovery message carries only one RSC.

It is worth noting that code security parameter(s) is(are) associated with RSC. U2U relay should use corresponding code security parameter(s) (Code-secParams) to protect/ check all discovery messages under a specific U2U relay service. The code security parameter(s) (Code-secParams) here is(are) the security parameter(s) for the U2U relay mentioned above.

### Second Stage:

4. The source UE/target UE sends a relay key discovery request message to its 5G DDNMF/PKMF, which contains RPAUID of its own, RSC, PC5 UE security capability of the source UE/target UE and the RPAUID(s) of the optional relay UE(s). The PC5 UE security capability of the source UE/target UE can represent the PC5 security algorithm(s) supported by the source UE and/or target UE.

It is worth noting that: a source UE/target UE supporting multiple RSCs can use multiple Relay Discovery Key messages to obtain security parameter(s), each Relay Discovery Key message carrying one RSC. That is, to obtain security parameters for services indicated by different RSCs, different request messages such as Relay Discovery Key messages are used.
5. The 5G DDNMF/PKMF of the source/target UE sends an authorization request to the ProSe application server/ PCF/UDM. If the source UE/target UE is allowed to use the specific U2U relay service, the ProSe application server/PCF/UDM returns an authorization response.
6. If the discovery request is authorized and the PLMN ID in the relay RPAUID(s) indicates a different PLMN, the 5G DDNMF/PKMF of the source UE/target UE contacts the 5G DDNMF/PKMF of the indicated PLMN (i.e. the 5G DDNMF of the U2U relay) by sending a monitor request including the PC5 UE security capability received in step 4.
   It is worth noting that if the relay RPAUID(s) belongs(belong) to multiple different PLMNs, the 5G DDNMF/PKMF of the source/target UE selects a PLMN and sends a discovery message (Discovery Request) to obtain the code security parameter(s) (Code-SecParams). The code security parameter(s) is(are) consistent with the above security parameter(s).
7. The 5G DDNMF/PKMF of the U2U relay exchanges authorization message(s) with the ProSe Application Server/PCF/UDM. The ProSe Application Server checks whether the source UE/target UE or UE-to-UE relay is authorized to perform U2U discovery under the specified U2U relay service, or checks whether the U2U relay is authorized to provide the U2U relay service for the source UE /target UE.
8. If U2U Relay is authorized and the PC5 UE security capability in step 4 includes the selected PC5 security algorithm, the 5G DDNMF/PKMF of the UE to UE Relay responds to the 5G DDNMF/PKMF of the source UE/target UE by returning a Discovery Response message including the corresponding Code Security Parameter(s) and the selected PC5 security algorithm (based on the information/key stored in step 3). The Code Security Parameter(s) provides(provide) the information required by the source UE/target UE to protect and unprotect the U2U Relay Discovery Message. The RSC and code receiving security parameter(s) are stored in the 5G DDNMF/PKMF of the source/target UE.
9. The 5G DDNMF/PKMF of the source UE/target UE returns the code security parameters, as well as CURRENT_TIME and MAX_OFFSET and the selected PC5 security algorithm. The source UE/target UE stores the code security parameter(s) (Code-SecParams), the selected PC5 security algorithm and RSC.

### Third Stage:

10. The source UE broadcasts a solicitation message and uses a corresponding code security parameter for protection. The solicitation message may include the type of discovery (i.e., U2U relay), RSC, information of the source UE (i.e., RPAUID of the source UE), and information of the target UE (i.e., RPAUID of the target UE).
11. Based on the timing of a timer based on Universal Time Coordinated (UTC) associated with the discovery slot, if it is within the time range corresponding to CURRENT-TIME and MAX_OFFSET, the relay UE monitors a solicitation message corresponding to a specified RSC. Upon receiving the Solicitation message, the U2U relay processes it using the code security parameter(s) corresponding to the RSC. If the integrity check/confidentiality check of the Solicitation message is passed, the U2U relay adds the relay information to the solicitation message and broadcasts the new solicitation message, and the solicitation message is protected by the corresponding code security parameter(s). The new solicitation information may contain the information of the type of discovery, relay information (i.e., the RPAUID of the UE-to-UE Relay), the RSC, relay indication (indicating forwarding by the U2U relay), original discoverer information (i.e., the RPAUID of the source UE) and target discoverer information (i.e., the RPAUID of the target UE).
12. If the current time is within the MAX_OFFSET range of the target UE's ProSe clock, the target UE listens to the solicitation message corresponding to the specified RSC. If the integrity check/confidentiality check is passed or the RPAUID of the U2U relay is within the optional relay RPAUID(s) and the integrity check/confidentiality check is passed, the target UE responds to the solicitation message with a response message.
13. Upon receiving the response message, the U2U relay checks its integrity and confidentiality according to the security policy. If the check is passed, the U2U relay forwards the response message containing the discovery message type, relay information (i.e., the relay's RPAUID), RSC, relay indication (indicating forwarding by the U2U relay), target discoverer information (i.e., the RPAUID of the target UE), and original discoverer information (i.e., the RPAUID of the source UE).

Upon receiving the response message from the U2U relay, the source UE checks its integrity and confidentiality and determines whether this U2U relay can be used. If the source UE wants to communicate with the target UE through the relay, the source UE can initiate the U2U relay link establishment procedure.

As shown in FIG. 10, an embodiment of the present disclosure provides an information processing apparatus. The method includes: a first sending module 110, a first receiving module 120 and a first monitoring module 130.

The first sending module 110 is configured to send a first request message to a network device, wherein the request message at least includes: a Relay Service Code (RSC).

The first receiving module 120 is configured to receive a first response message which is returned by the network device based on the first request message, wherein the relay UE is authorized to provide a relay service indicated by the RSC, and the first response message includes: a security parameter for UE-to-UE relay discovery.

The first monitoring module 130 is configured to performing monitoring of a second request message from a source UE after the first response message is received.

The first sending module is configured to broadcast a third request message according to the second request message and relay information when the relay UE supports a relay service indicated by a RSC included in the second request message.

The information processing apparatus may include the aforementioned relay UE.

In some embodiments, the first sending module 110, the first receiving module 120 and the first monitoring module 130 may all be program modules; after the program modules are executed by a processor, the above operations can be implemented.

In other embodiments, the first sending module 110, the first receiving module 120 and the first monitoring module 130 may all be a combination of software and hardware modules; the combination of software and hardware modules includes but is not limited to a programmable array; the programmable array includes but is not limited to: a field programmable array and/or a complex programmable array.

In some other embodiments, the first sending module 110, the first receiving module 120 and the first monitoring module 130 may all be pure hardware modules; the pure hardware modules include but are not limited to: application specific integrated circuits.

In some embodiments, the first receiving module is configured to receive a third response message which is returned based on the third request message;
the first sending module is further configured to return a second response message to the source UE when the third response message is received.

In some embodiments, when the relay UE supports the relay service indicated by the RSC included in the second request message, broadcasting the third request message according to the second request message and the relay information includes:
when it is monitored that the second request message includes the RSC and the security check of the second request message using the security parameter is passed, broadcasting the third request message according to the second request message and the relay information.

In some embodiments, the second request message further includes at least one of the following:
information of a type of discover;
device information of the source UE ;
device information of the target UE.

In some embodiments, the relay information includes at least one of the following:
device information of the relay UE;
a relay indication.

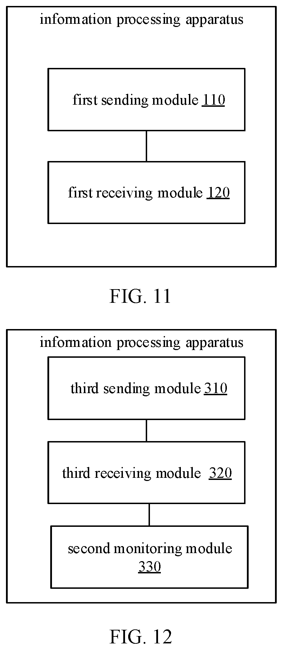

As shown in FIG. 11, an embodiment of the present disclosure provides an information processing apparatus. The apparatus includes: a second sending module 210 and a second receiving module 220.

The second sending module 210 is configured to send a first request message to a network device, wherein the request message at least includes: a Relay Service Code (RSC).

The second receiving module 220 is configured to receive a first response message which is returned by the network device based on the first request message, wherein the source UE is authorized to obtain the relay service indicated by the RSC, and the first response message includes: a security parameter for UE-to-UE relay discovery.

The second sending module 210 is further configured to broadcast a second request message after the first response message is received. The second request message is used to discover a target UE through a relay UE.

The information processing apparatus may include the aforementioned source UE.

In some embodiments, the second sending module 210 and the second receiving module 220 may both be program modules; after the program modules are executed by a processor, the above operations can be implemented.

In other embodiments, the second sending module 210 and the second receiving module 220 may both be a combination of software and hardware modules; the combination of software and hardware modules includes but is not limited to a programmable array; the programmable array includes but is not limited to: a field programmable array and/or a complex programmable array.

In some other embodiments, the second sending module 210 and the second receiving module 220 may both be pure hardware modules; the pure hardware modules include but are not limited to: application specific integrated circuits.

In some embodiments, the second receiving module 220 is further configured to receive a second response message, wherein the second response message is sent by the relay UE after the relay UE receives a third response message, wherein the third response message is returned to the relay UE by the target UE after the target UE receives the third request message which is broadcast based on the second request message and the relay information.

In some embodiments, the apparatus further includes:
a first link module further configured to establish a relay link with the relay UE after the second response message is received, wherein the relay link is used for a relay communication between the source UE and the target UE.

In some embodiments, the apparatus further includes:
a first processing module configured to, after the first response message is received, perform security processing on the second request message using the security parameter;
the second sending module 210 is further configured to broadcast the second request message for which security processing is performed using the security parameter.

As shown in FIG. 12, an embodiment of the present disclosure provides an information processing apparatus. The apparatus includes: a third sending module 310, a third receiving module 320 and a second monitoring module 330.

The third sending module 310 is configured to send a first request message to a network device, wherein the request message at least includes: RSC.

The third receiving module 320 is configured to receive a first response message which is returned by the network device based on the first request message, wherein the target UE is authorized to obtain the relay service indicated by the RSC, and the first response message includes: a security parameter for UE-to-UE relay discovery.

The second monitoring module 330 is configured to monitor a third request message after the first response message is received.

The third sending module 310 is configured to return a third response message when the target UE supports the relay service indicated by the RSC carried in the third request message, wherein the third response message is used for the relay UE to return the second response message to the source UE.

The information processing apparatus may include the aforementioned target UE.

In some embodiments, the third sending module 310, the third receiving module 320 and the second monitoring module 330 may all be program modules; after the program modules are executed by a processor, the above operations can be implemented.

In other embodiments, the third sending module 310, the third receiving module 320 and the second monitoring module 330 may all be a combination of software and hardware modules; the combination of software and hardware modules includes but is not limited to a programmable array; the programmable array includes but is not limited to: field programmable array and/or complex programmable array.

In some other embodiments, the third sending module 310, the third receiving module 320 and the second monitoring module 330 may all be pure hardware modules; the pure hardware modules include but are not limited to: application specific integrated circuits.

In some embodiments, the third sending module 310 is further configured to return a third response message when the target UE supports the relay service indicated by the RSC carried in the third request message and the third request message passes the security check based on the security parameter.

In some embodiments, the third receiving module 320 is further configured to receive a link establishment request from a relay UE after the third response message is sent;
the apparatus further includes:
a second link module configured to establish a relay link with the relay UE based on the link establishment request, wherein the relay link is used for a relay communication between the target UE and the source UE.

In some embodiments, the third sending module 310 is further configured to return the third response message when the target UE supports the relay service indicated by the RSC carried in the third request message and selects the relay UE to obtain the relay service, wherein the third response message is used for the relay UE to return the second response message to the source UE.

An embodiment of the present disclosure provides a communication device, including:
a memory storing instructions executable by a processor; and
the processor connected to the memory;
wherein the processor is configured to perform the information processing method provided by any of the aforementioned technical solutions.

The processor may include various types of storage medium, and the storage medium is a non-transitory computer storage medium that can continue to memorize information stored thereon after the communication device is powered off.

Here, the communication device includes: a UE or a network device, and the UE may be the aforementioned source UE, relay UE and/or target UE.

The processor may be connected to the memory via a bus or the like, and is used to read an executable program stored in the memory, for example, at least one of the methods shown in FIG. 2 to FIG. 9.

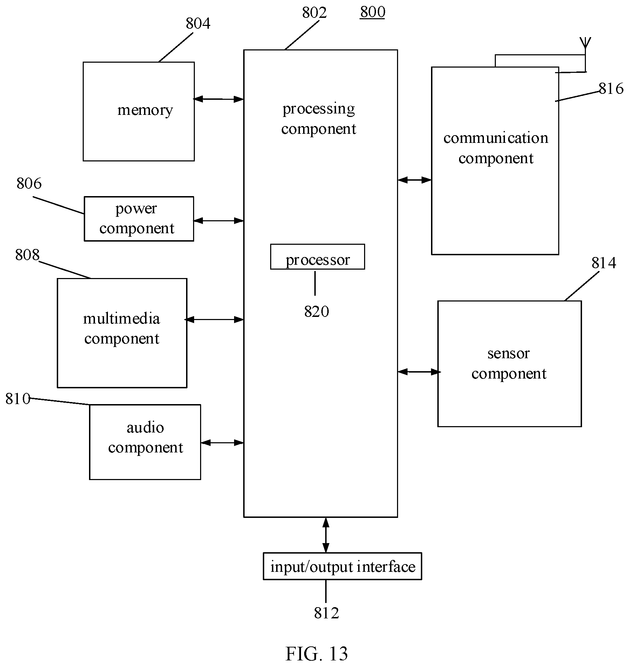

FIG. 13 is a block diagram of a UE 800 according to an example embodiment. For example, the UE 800 may be a mobile phone, a computer, digital broadcast user equipment, a messaging device, a gaming console, a tablet, a medical device, exercise equipment, a personal digital assistant, and the like.

Referring to FIG. 13, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 2G, or 3G, or a combination thereof. In one example embodiment, the communication component 816 receives a broadcast signal or broadcast associated information from an external broadcast management system via a broadcast channel. In one example embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 804 including instructions executable by the processor 820 in the UE 800, for performing the above-described methods. For example, the non-transitory computer-readable storage medium may be a ROM, a Random Access Memory (RAM), a CD-ROM, a magnetic tape, a floppy disc, an optical data storage device, and the like.

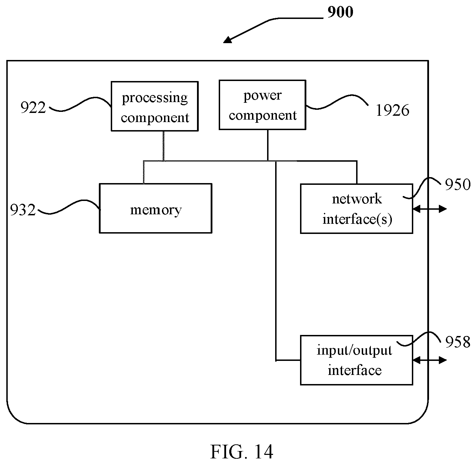

As shown in FIG. 14, an embodiment of the present disclosure shows a structure of a network device. For example, the network device 900 may be provided as a network side device. The communication device may be various network element(s) such as the aforementioned access network element and/or network function.

Referring to FIG. 14, the network device 900 includes a processing component 922 that further includes one or more processors, and memory resources represented by a memory 932 for storing instructions executable by the processing component 922, such as application programs. The application programs stored in the memory 932 may include one or more modules each corresponding to a set of instructions. Further, the processing component 922 is configured to execute the instructions to perform any method of the aforementioned method(s) applied to the access device, for example, any method shown in any one of FIG. 2 to FIG. 9.

The network device 900 may also include a power component 926 configured to perform power management of the network device 900, wired or wireless network interface(s) 950 configured to connect the network device 900 to a network, and an input/output (I/O) interface 958. The network device 900 may operate based on an operating system stored in the memory 932, such as Windows Server^{™}, Mac OS X^{™}, Unix^{™}, Linux^{™}, FreeBSD^{™}, or the like.

An embodiment of the present disclosure provides a computer storage medium storing an executable program. After the executable program is executed by a processor, the information processing method provided by any of the aforementioned technical solutions, such as one or more of the methods shown in FIG. 2 to FIG. 9, can be implemented.

The computer storage medium may include, but is not limited to, a non-transitory computer-readable storage medium.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An information processing method, performed by a relay UE, wherein the relay UE is capable of establishing links with a source UE and a target UE respectively to realize a UE-to-UE relay communication between the source UE and the target UE as a relay, and the method comprises:
sending a first request message to a network device, wherein the request message at least comprises a Relay Service Code (RSC), and the RSC is used to identify a relay service;
receiving a first response message which is returned by the network device based on the first request message, wherein the relay UE is authorized to provide the relay service indicated by the RSC, and the first response message comprises a security parameter for UE-to-UE relay discovery;
after receiving the first response message, performing monitoring of a second request message from the source UE; and
when the relay UE supports the relay service indicated by the RSC comprised in the second request message, broadcasting a third request message according to the second request message and relay information.

2. The method according to claim 1, further comprising:
receiving a third response message which is returned based on the third request message; and
when the third response message is received, returning a second response message to the source UE.

3. The method according to claim 2, wherein when the relay UE supports the relay service indicated by the RSC comprised in the second request message, broadcasting the third request message according to the second request message and the relay information comprises:
after it is monitored that the second request message comprises the RSC and security check of the second request message using the security parameter is passed, broadcasting the third request message according to the second request message and the relay information.

4. The method according to any one of claims 1 to 3, wherein the second request message further comprises at least one of:
information of a type of discovery;
device information of the source UE;
device information of the target UE.

5. The method according to any one of claims 1 to 3, wherein the relay information comprises at least one of:
device information of the relay UE;
a relay indication.

6. An information processing method, performed by a source UE, the method comprising:
sending a first request message to a network device, wherein the request message at least comprises a Relay Service Code (RSC), and the RSC is used to identify a relay service;
receiving a first response message which is returned by the network device based on the first request message, wherein the source UE is authorized to obtain the relay service indicated by the RSC, and the first response message comprises a security parameter for UE-to-UE relay discovery; and
after receiving the first response message, broadcasting a second request message, wherein the second request message is used to discover a target UE via a relay UE.

7. The method according to claim 6, further comprising:
receiving a second response message, wherein the second response message is sent by the relay UE after the relay UE receives a third response message, and the third response message is returned to the relay UE after the target UE receives a third request message which is broadcast based on the second request message and relay information.

8. The method according to claim 7, further comprising:
after receiving the second response message, establishing a relay link with the relay UE, wherein the relay link is used for a relay communication between the source UE and the target UE.

9. The method according to any one of claims 6 to 8, further comprising:
after receiving the first response message, performing security processing on the second request message using the security parameter;
wherein broadcasting the second request message comprises:
broadcasting the second request message on which security processing is performed using the security parameter.

10. An information processing method, performed by a target UE, the method comprising:
sending a first request message to a network device, wherein the request message at least comprises a Relay Service Code (RSC), and the RSC is used to identify a relay service;
receiving a first response message which is returned by the network device based on the first request message, wherein the target UE is authorized to obtain the relay service indicated by the RSC, and the first response message comprises a security parameter for UE-to-UE relay discovery;
after receiving the first response message, performing monitoring of a third request message; and
when the target UE supports the relay service indicated by the RSC carried in the third request message, returning a third response message, wherein the third response message is used for a relay UE to return a second response message to a source UE.

11. The method according to claim 10, wherein when the target UE supports the relay service indicated by the RSC carried in the third request message, returning the third response message comprises:
when the target UE supports the relay service indicated by the RSC carried in the third request message and the third request message passes security check based on the security parameter, returning the third response message.

12. The method according to claim 10 or 11, further comprising:
after sending the third response message, receiving a link establishment request from the relay UE;
based on the link establishment request, establishing a relay link with the relay UE, wherein the relay link is used for a relay communication between the target UE and the source UE.

13. The method according to any one of claims 10 to 12, wherein when the target UE supports the relay service indicated by the RSC carried in the third request message, returning the third response message comprises:
when the target UE supports the relay service indicated by the RSC carried in the third request message and selects the relay UE to obtain the relay service, returning the third response message, wherein the third response message is used for the relay UE to return a second response message to the source UE.

14. An information processing apparatus, the method comprising:
a first sending module configured to send a first request message to a network device, wherein the request message at least comprises a Relay Service Code (RSC), and the RSC is used to identify a relay service;
a first receiving module configured to receive a first response message which is returned by the network device based on the first request message, wherein the relay UE is authorized to provide the relay service indicated by the RSC, and the first response message comprises a security parameter for UE-to-UE relay discovery; and
a first monitoring module configured to perform monitoring of a second request message from a source UE after the first response message is received;
wherein the first sending module is configured to, when the relay UE supports the relay service indicated by the RSC comprised in the second request message, broadcast a third request message according to the second request message and relay information.

15. The apparatus according to claim 14, wherein:
the first receiving module is configured to receive a third response message which is returned based on the third request message;
the first sending module is further configured to return a second response message to the source UE when the third response message is received.

16. The method according to claim 15, wherein broadcasting the third request message according to the second request message and the relay information when the relay UE supports the relay service indicated by the RSC comprised in the second request message, comprises:
after it is monitored that the second request message comprises the RSC and security check of the second request message using the security parameter is passed, broadcasting the third request message according to the second request message and the relay information.

17. The apparatus according to any one of claims 14 to 16, wherein the second request message further comprises at least one of:
information of a type of discovery;
device information of the source UE;
device information of a target UE.

18. The apparatus according to any one of claims 14 to 16, wherein the relay information comprises at least one of:
device information of the relay UE;
a relay indication.

19. An information processing apparatus, comprising:
a second sending module configured to send a first request message to a network device, wherein the request message at least comprises a Relay Service Code (RSC), and the RSC is used to identify a relay service; and
a second receiving module configured to receive a first response message which is returned by the network device based on the first request message, wherein the source UE is authorized to obtain the relay service indicated by the RSC, and the first response message comprises a security parameter for UE-to-UE relay discovery;
wherein the second sending module is further configured to broadcast a second request message after the first response message is received, wherein the second request message is used to discover a target UE through a relay UE.

20. The apparatus according to claim 19, wherein the second receiving module is further configured to receive a second response message, wherein the second response message is sent by the relay UE after the relay UE receives a third response message, and the third response message is returned to the relay UE after the target UE receives a third request message which is broadcast based on the second request message and relay information.

21. The apparatus according to claim 20, further comprising:
a first link module further configured to establish a relay link with the relay UE after the second response message is received, wherein the relay link is used for a relay communication between the source UE and the target UE.

22. The apparatus according to any one of claims 19 to 21, further comprising:
a first processing module configured to, after the first response message is received, perform security processing on the second request message using the security parameter;
wherein the second sending module is further configured to broadcast the second request message on which security processing is performed using the security parameter.

23. An information processing apparatus, comprising:
a third sending module configured to send a first request message to a network device, wherein the request message at least comprises a Relay Service Code (RSC), and the RSC is used to identify a relay service;
a third receiving module configured to receive a first response message which is returned by the network device based on the first request message, wherein the target UE is authorized to obtain the relay service indicated by the RSC, and the first response message comprises a security parameter for UE-to-UE relay discovery; and
a second monitoring module configured to perform monitoring of a third request message after the first response message is received;
wherein the third sending module is configured to, when the target UE supports the relay service indicated by the RSC carried in the third request message, return a third response message, wherein the third response message is used for a relay UE to return a second response message to a source UE.

24. The apparatus according to claim 23, wherein the third sending module is further configured to return a third response message when the target UE supports the relay service indicated by the RSC carried in the third request message and the third request message passes the security check based on the security parameter.

25. The apparatus according to claim 23 or 24, wherein the third receiving module is further configured to receive a link establishment request from the relay UE after the third response message is sent;
wherein the apparatus further comprises:
a second link module configured to establish a relay link with the relay UE based on the link establishment request, wherein the relay link is used for a relay communication between the target UE and the source UE.

26. The apparatus according to any one of claims 23 to 25, wherein the third sending module is further configured to return a third response message when the target UE supports the relay service indicated by the RSC carried in the third request message and selects the relay UE to obtain the relay service, wherein the third response message is used for the relay UE to return a second response message to the source UE.

27. A communication device, comprising a processor, a transceiver, a memory, and an executable program stored in the memory and capable of being run by the processor, wherein when the executable program is run by the processor, the method according to any one of claims 1 to 5, 6 to 9, or 10 to 13 is implemented.

28. A computer storage medium storing an executable program, wherein after the executable program is executed by a processor, the method according to any one of claims 1 to 5, 6 to 9, or 10 to 13 is implemented.
